# FASCICULE DE BREVET EUROPEEN

(11) **EP 0 749 007 B1**
(45) Date de publication et mention de la délivrance du brevet: **17.10.2001**
(21) Numéro de dépôt: 96401287.6
(22) Date de dépôt: 13.06.1996
(51) Int. Cl.: G01J 5/20

(54) **Dispositif de détection bolométrique pour ondes millimétriques et submillimétriques et procédé de fabrication de ce dispositif**
Bolometrische Detektorvorrichtung für Millimeter- und Submillimeterwellen und Herstellungsverfahren für diese Vorrichtung
Bolometric detecting device for millimeter and submillimeter waves and method of manufacturing this device

(30) Priorité: 15.06.1995 FR 9507151
(43) Date de publication de la demande: 18.12.1996
(73) Titulaire: COMMISSARIAT A L'ENERGIE ATOMIQUE, 75015 Paris (FR)
(72) Inventeur: Agnese, Patrick, 38340 Voreppe (FR); Sajer, Jean-Michel, 33980 Audenge (FR)
(74) Mandataire: Dubois-Chabert, Guy

(56) Documents cités:
- EP-A- 0 354 369
- EP-A- 0 534 768
- WO-A-90/16082
- APPL. OPTICS, vol. 33, no. 1, 1 Janvier 1994, US, pages 11-23, XP000425840 L.A.PAGE ET AL.: "Millimeter-submillimeter wavelength filter system"

## Description

### DOMAINE TECHNIQUE

La présente invention concerne un dispositif de détection bolométrique pour ondes millimétriques et submillimétriques ainsi qu'un procédé de fabrication de ce dispositif.

Elle s'applique notamment à l'astrophysique spatiale ainsi qu'à l'observation dans l'infrarouge moyen et à l'observation astronomique à partir de télescopes au sol.

### ÉTAT DE LA TECHNIQUE ANTÉRIEURE

On connaît déjà des dispositifs de détection bolométriques pour ondes millimétriques et submillimétriques.

Ces dispositifs connus sont réalisés par assemblage de bolomètres individuels qui sont respectivement prolongés par des cônes.

A ce sujet on consultera les documents (1) à (5) qui, comme les autres documents cités par suite, sont mentionnés à la fin de la présente description.

Compte tenu de l'ouverture des cônes et de l'encombrement du plan focal des dispositifs connus mentionnés plus haut, le nombre de bolomètres de ces dispositifs est limité et ces dispositifs conduisent à un sous-échantillonnage spatial.

De plus, la réalisation individuelle des bolomètres de ces dispositifs pose notamment des problèmes de reproductibilité et de fiabilité en particulier pour les applications spatiales des dispositifs.

### EXPOSÉ DE L'INVENTION

La présente invention a pour objet un dispositif de détection bolométrique pour ondes millimétriques et submillimétriques qui a une plus grande fiabilité et qui est plus facilement reproductible que les dispositifs connus mentionnés plus haut.

De façon précise, l'invention a pour objet un dispositif de détection bolométrique pour ondes millimétriques et submillimétriques, ce dispositif comprenant au moins un bolomètre formé sur un support transparent aux ondes à détecter, ce dispositif étant caractérisé en ce que chaque bolomètre comprend :
- une cavité résonante réflectrice,
- une grille thermiquement isolée du support et placée au-dessus de la cavité,
- un ensemble de motifs périodiques électriquement conducteurs qui sont formés sur la grille et dont l'impédance électrique est adaptée à celle du vide, et
- un thermomètre principal rendu solidaire de la grille.

Les motifs conducteurs peuvent être électriquement reliés les uns aux autres ou électriquement isolés les uns des autres.

De préférence, la taille des motifs est de l'ordre de la moitié de la longueur d'onde moyenne des ondes à détecter.

De préférence également, le pas de la grille est de l'ordre de la moitié de la longueur d'onde moyenne des ondes à détecter.

Selon un mode de réalisation particulier du dispositif objet de l'invention, chaque bolomètre comprend en outre un thermomètre auxiliaire associé au thermomètre principal en vue de faire une mesure différentielle de température.

Le dispositif objet de l'invention peut comprendre en outre un circuit électronique de lecture des signaux fournis par chaque bolomètre.

Chaque bolomètre peut être associé à un cône concentrateur.

Le dispositif objet de l'invention peut comprendre une matrice de MxN bolomètres, M et N étant des nombres entiers au moins égaux à 1.

La présente invention concerne également un procédé de fabrication du dispositif de détection objet de la présente invention, caractérisé en ce qu'il comprend les étapes suivantes :
- on forme le thermomètre principal et les motifs conducteurs du bolomètre sur un substrat de silicium/silice/silicium,
- on forme la grille du bolomètre sur ce substrat,
- on élimine la silice du substrat sous cette grille, et
- on forme la cavité résonante réflectrice sous la grille.

Selon un premier mode de mise en oeuvre particulier du procédé objet de l'invention, pour former la cavité,
- on élimine, sous la grille, le silicium du substrat, à partir de la face-arrière de ce substrat, en laissant subsister une couche de silicium dont l'épaisseur correspond à la résonance, et
- on forme une couche réflectrice sur cette couche de silicium du côté de la face-arrière du substrat.

Selon un autre mode de mise en oeuvre particulier, pour former la cavité,
- on élimine, sous la grille, le silicium du substrat, à partir de la face-avant de ce substrat et sur une profondeur correspondant à la résonance, et
- on forme une couche réflectrice en regard de la grille, au fond de la cavité ainsi obtenue par l'élimination du silicium.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en perspective schématique d'un mode de réalisation particulier du dispositif de détection bolométrique objet de l'invention, comprenant une matrice de bolomètres,
- la figure 2 est une vue schématique de l'un des bolomètres du dispositif représenté sur la figure 1,
- les figures 3A à 3H illustrent schématiquement différentes étapes de fabrication d'un dispositif du genre de celui de la figure 1,
- la figure 3I illustre schématiquement une étape d'un procédé comprenant aussi les étapes illustrées par les figures 3A à 3D et permettant d'obtenir un autre dispositif conforme à l'invention, et
- les figures 4 à 7 illustrent schématiquement différents motifs conducteurs utilisables dans la présente invention.

### EXPOSÉ DÉTAILLÉ DE MODES DE RÉALISATION PARTICULIERS

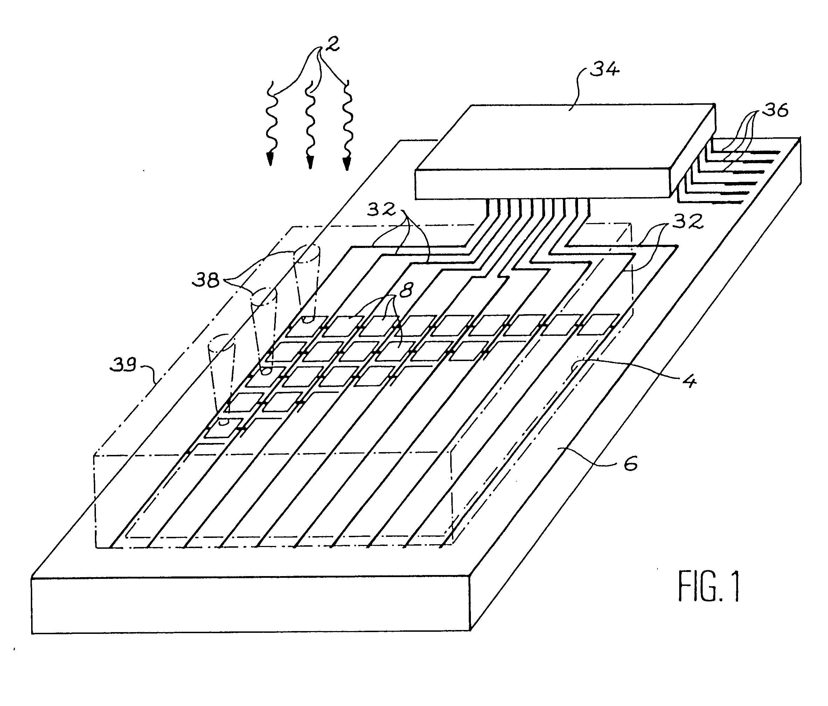

Le dispositif conforme à l'invention qui est schématiquement représenté en perspective sur la figure 1 est destiné à la détection bolométrique d'ondes millimétriques et submillimétriques 2.

Ce dispositif de la figure 1 comprend une matrice de bolomètres 4 formée sur un support 6 qui est transparent aux ondes à détecter.

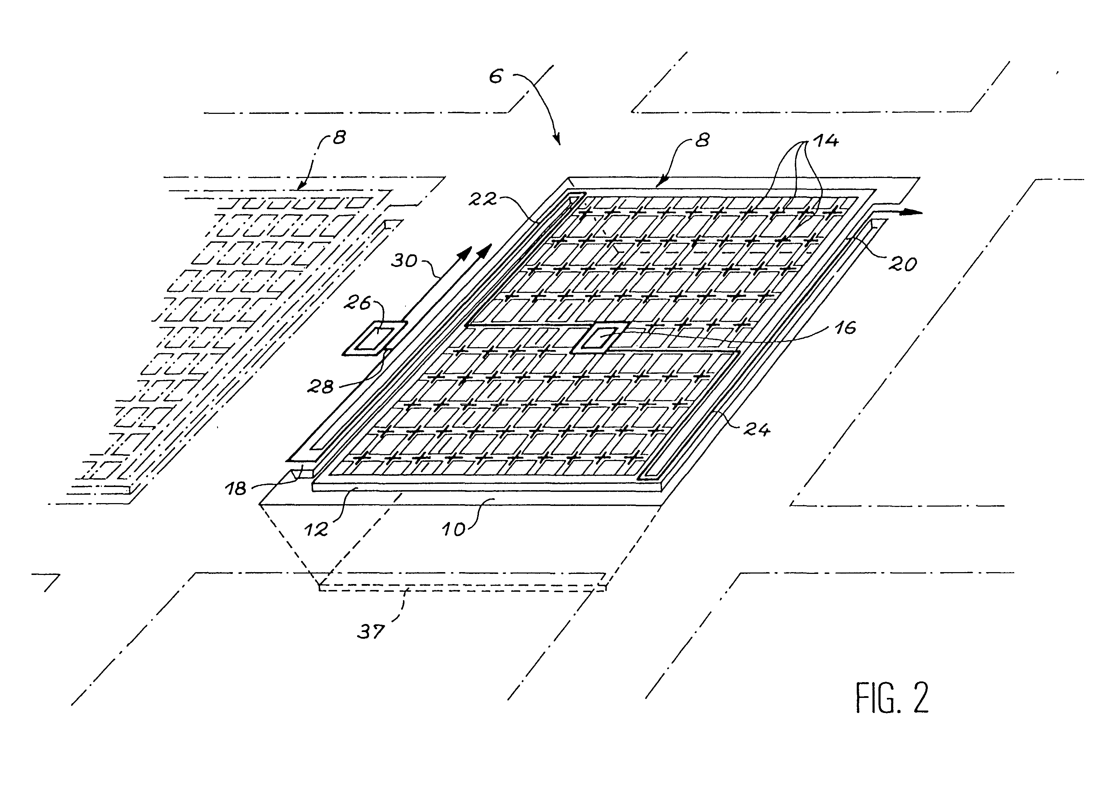

La figure 2 est une vue en perspective schématique d'un bolomètre 8 de la matrice 4 de la figure 1.

Chaque bolomètre 8 comprend
- une cavité résonante réflectrice 10,
- une grille 12 qui est thermiquement isolée du support 6 et qui est placée au-dessus de la cavité 10,
- un ensemble de motifs périodiques électriquement conducteurs 14 qui sont formés sur la grille 12 et dont l'impédance électrique est adaptée à celle du vide, et
- un thermomètre 16 qui est rendu solidaire de la grille 12.

Dans l'exemple représenté sur les figures 1 et 2, le support ou substrat 6 est fait d'un matériau semiconducteur comme le silicium.

La grille 12 de chaque bolomètre est micro-usinée, comme on le verra mieux par la suite, à partir de ce support 6.

Cette grille 12 est suspendue par deux bras 18 et 20 au substrat 6 comme on le voit sur la figure 2.

Les motifs conducteurs 14 qui sont distribués périodiquement sur la grille 12 peuvent avoir diverses formes, comme on le verra mieux par la suite, et peuvent
- soit être en contact électrique les uns avec les autres, auquel cas ils sont appelés "motifs inductifs",
- soit être électriquement isolés les uns des autres, auquel cas ils sont appelés "motifs capacitifs" (ce qui est le cas de la figure 2).

Dans l'exemple représenté sur la figure 2, le thermomètre 16 occupe une position centrale sur la grille correspondante 14.

Ce thermomètre 16 est formé dans une partie du silicium qui reste pleine, contrairement au reste de la grille.

On voit également sur la figure 2 deux lignes électriques 22 et 24 qui sont associées au thermomètre 16.

La ligne électrique 22 s'étend sur la grille à partir du thermomètre 16 comme on le voit sur la figure 2.

Cette ligne 22 se prolonge ensuite sur le bras 18 pour se retrouver sur la face supérieure du support 6 comme on le voit sur la partie gauche de la figure 2.

Cette ligne 22 constitue la ligne de lecture du thermomètre 16.

L'autre ligne 24 associée à ce thermomètre est une ligne d'alimentation électrique de ce thermomètre.

On précise que l'alimentation électrique est d'ailleurs commune à tous les bolomètres de la matrice 4.

Cette ligne 24 s'étend sur la grille à partir du thermomètre 16 pour se retrouver ensuite sur le bras 20 correspondant à cette grille puis sur la face supérieure du support 6 comme on le voit sur la partie droite de la figure 2.

Dans l'exemple représenté sur la figure 2, chaque thermomètre 16 est associé à un autre thermomètre 26 constituant un thermomètre de compensation permettant de faire des mesures différentielles avec le thermomètre 16.

Le thermomètre 26 est formé sur la face supérieure du support 6 (à gauche de la grille 6 dans l'exemple représenté).

Le détecteur 26 est également muni de deux lignes électriques à savoir
- une ligne 28 qui est reliée à la ligne 22 du détecteur 16 comme on le voit sur la figure 2 et
- une autre ligne 30 constituant une ligne de lecture qui est parallèle à la partie de cette ligne 22 se trouvant sur la face supérieure du substrat 6 (partie gauche de la figure 2).

La matrice de bolomètres 4 est organisée en rangées et s'il y a par exemple dix bolomètres par rangée on obtient, pour chaque rangée, 10x2 lignes de lecture d'un côté et, de l'autre côté, une ligne d'alimentation commune des bolomètres de cette rangée.

Comme on le voit sur la figure 1, les diverses lignes de la matrice sont regroupées suivant des bus de sortie 32 formés sur la face supérieure du support 6.

Ces bus de sortie sont reliés à un circuit de lecture 34 de la matrice 4.

Dans l'exemple représenté sur la figure 1, ce circuit de lecture est hybridé sur la face supérieure du support 6.

On voit également sur la figure 1 diverses lignes conductrices 36 qui sont reliées au circuit de lecture 34 et qui constituent des lignes d'entrée-sortie de ce circuit de lecture.

On précise que le thermomètre de compensation 26 est réalisé, comme le thermomètre 16, par implantation d'ions appropriés dans le silicium comme on le verra mieux par la suite.

Le fond de la cavité 10 est métallisé de manière à obtenir une cavité réflectrice.

La distance entre les motifs conducteurs 14 et ce fond métallisé constituant un réflecteur 37 peut être égale au quart de la longueur d'onde moyenne de la gamme des ondes électromagnétiques que l'on veut détecter avec le dispositif de la figure 1.

On précise également que ce dispositif, pour fonctionner à haute performance, peut être porté à basse température inférieure à quelques Kelvin, par exemple égale à 0,3 K et mis sous vide cryogénique.

Dans certaines applications, on peut utiliser le dispositif aux températures ambiantes.

La matrice de bolomètres représentée schématiquement sur la figure 1 est une matrice monolithique comprenant des bolomètres ou pixels qui sont sensiblement jointifs et qui peuvent être nombreux par exemple une centaine.

L'utilisation d'une matrice monolithique à grand nombre de pixels jointifs permet, contrairement aux dispositifs connus, mentionnés plus haut, un sur-échantillonnage spatial.

Une absorption très proche de 100% et spectralement sélective est réalisée grâce à chaque bolomètre.

La sélectivité spectrale et l'ouverture optique ("field of view") peuvent être améliorées grâce aux moyens optiques (non représentés) associés aux bolomètres pour l'utilisation du dispositif.

Il est à noter que le principe de l'invention peut être appliqué pour réaliser l'équivalent d'une peinture noire nécessaire à la maîtrise des flux réfléchis dans l'enceinte dans laquelle on place le dispositif de détection.

On décrira plus loin un procédé permettant de fabriquer l'ensemble des bolomètres du dispositif et ce de façon collective.

Il n'est pas indispensable que le circuit de lecture 34, du type MOS cryogénique, soit placé dans le plan focal du dispositif mais ceci est avantageux pour avoir un composant complet dans ce plan focal.

Le dispositif de la figure 1 combine les trois principes suivants :
- le principe d'absorption par cavité résonante quart-d'onde (principe utilisé dans les systèmes antiradar) et, à ce sujet, on se reportera au document (6),
- le principe d'absorption par excitation d'ondes électromagnétiques de surface et, à ce sujet, on se reportera au document (7), et
- le principe de sélectivité en longueur d'onde d'un filtre submillimétrique utilisant un réseau périodique de motifs métalliques et, à ce sujet, on se reportera au document (8) en notant toutefois que dans ce document (8) il n'est pas question d'utiliser la propriété d'absorption d'un métal de résistivité adaptée.

Chacun des bolomètres du dispositif, bolomètre dont un exemplaire est représenté sur la figure 2, est d'autant plus performant que sa température est basse (de l'ordre de 0,1 K à 0,3 K par exemple), que sa capacité calorifique est faible et que son isolement thermique est optimal.

La condition de faible capacité calorifique est réalisée par le choix d'une grille plutôt que d'un plan homogène.

On garantit par là même une relative immunité vis-à-vis des particules cosmiques présentes dans un environnement spatial en particulier.

Deux caractéristiques du dispositif de la figure 1 contribuent à réaliser une double résonance électromagnétique vis-à-vis d'une onde incidente, à savoir :
- la cavité aménagée sous la grille, au fond de laquelle est déposé un réflecteur métallique à une distance qui peut être égale au quart de la longueur d'onde moyenne des ondes que l'on voudrait détecter, et
- les motifs conducteurs (dépôts métalliques) sur la grille en silicium, motifs qui peuvent avoir la forme d'une croix ou d'un L par exemple et qui peuvent être dissociés ou non les uns des autres.

Ces motifs sont reproduits suivant le pas de la grille périodique et ont une longueur équivalente à la moitié de la longueur d'onde pour laquelle on cherche la résonance et donc l'absorption, ainsi qu'une résistance électrique par carré adaptée.

Avec un dispositif du genre de celui de la figure 1, on peut obtenir des absorptions voisines de l'unité, avec une sélectivité spectrale relativement faible (absorption supérieure à 95% de 200 à 400 µm de longueur d'onde) et une faible dépendance (de quelques %) vis-à-vis de l'angle d'incidence des ondes (inférieur à 30° en valeur absolue).

Du point de vue thermométrique, le thermomètre 16 placé au centre de la grille et le thermomètre 26 disposé sur le support 6 (support de référence en température) ou éventuellement au centre d'une grille aveugle (grille munie de motifs conducteurs qui n'interagissent pas avec les longueurs d'onde que l'on veut détecter) permettent une mesure différentielle pour s'affranchir des fluctuations parasites de température de référence ainsi que des dispersions spatiales à grande échelle des bolomètres.

Dans une variante avantageuse non représentée, conduisant à une meilleure compensation, le thermomètre 26 est placé au centre d'un bras supplémentaire isolé thermiquement du support 6, placé le long d'un côté du pixel 8 de manière à ce que l'isolement thermique soit égal pour l'un et l'autre thermomètres.

Ces deux thermomètres peuvent être fondés sur les propriétés de transport du silicium implanté.

A ce sujet on se reportera au document (2).

Le dispositif de la figure 1 a de bonnes performances à 0,3 K et il est utilisable pour la plupart des applications spatiales ou au sol.

Ses performances sont encore meilleures à 0,1 K.

Etant donné le facteur de remplissage de la grille, la résistance par carré du film métallique que l'on utilise pour réaliser l'adaptation d'impédance est plus faible que celle qui est nécessaire dans le cas des bolomètres formés sur un plan homogène et utilisant généralement une couche de bismuth.

Pour réaliser ce film métallique, on peut utiliser une couche mince en aluminium, en or ou en TIN (titane déposé sous azote) dont la résistivité peut être supérieure de trois ordres de grandeurs à celle d'un matériau massif du fait de sa granulosité et suivant la méthode de dépôt utilisée.

On peut également réaliser une implantation dans le silicium lui-même ce qui permet un bien meilleure couplage thermique entre les bains d'électrons dans la couche absorbante et le bain de phonons dans le support, en revanche la capacité calorifique du film sera plus grande.

Ce couplage est très sensible aux températures considérées.

On explique ci-après le principe de fonctionnement du dispositif de la figure 1.

Le principe connu de la cavité résonante permet d'amplifier le champ électrique au niveau du métal où l'on induit, par discontinuité du champ magnétique, une densité de courant électrique.

Ce courant dissipe, par effet Joule dans le métal résistif, une puissance qui correspond donc à une absorption de l'onde incidente.

A ce sujet on se reportera au document (6).

Lorsque la grille, qui est recouverte de motifs métalliques inductifs (respectivement capacitifs), a un pas relativement inférieur à la longueur d'onde moyenne des ondes incidentes, alors du point de vue électromagnétique, cette grille est vue comme un plan homogène résistif et inductif (respectivement résistif et capacitif) et devient équivalente à un bolomètre submillimétrique classique.

Lorsque la longueur d'onde est supérieure au pas de la grille et que la taille du motif métallique est la moitié de la longueur d'onde que l'on cherche à absorber, on a résonance à cette longueur d'onde.

A ce sujet on se reportera au document (7).

S'il n'y a pas de continuité électrique des motifs conducteurs, c'est-à-dire s'ils sont capacitifs, le courant induit dans la couche va à son tour résonner dès lors que la longueur caractéristique des motifs est égale à la moitié de la longueur d'onde moyenne des ondes incidentes.

L'intérêt d'une grille par rapport à un plan homogène est, avant tout, le gain en capacité calorifique (le volume est sensiblement réduit) et d'autre part une plus large bande d'absorption.

Donc l'association grille-cavité résonante conduit à un bolomètre bien plus performant que les bolomètres connus (ayant un plan homogène avec ou sans cavité).

Il est à noter que les motifs conducteurs seuls, qu'ils soient capacitifs ou inductifs, ne présentent pas, en absorption, d'effet de résonance aussi marqué que lorsqu'ils sont associés à une cavité.

La figure 1 illustre également de façon schématique la possibilité d'associer une matrice de cônes concentrateurs 38, encore appelés "cônes de Winston", à la matrice de bolomètres.

Dans le cas contraire, afin de délimiter le flux parasite des moyens optiques (non représentés) qui sont associés au dispositif et qui ne sont pas nécessairement refroidis, on peut réduire l'angle de vue de façon collective et tirer parti du fait que les bolomètres à grille sont sélectifs non seulement en longueur d'onde mais encore en angle d'incidence.

Dans le cas de l'utilisation des cônes concentrateurs, chaque cavité résonante est métallisée non seulement au fond mais encore sur les côtés de manière à obtenir une cavité "fermée".

Le substrat 39 dans lequel sont formés les cônes peut également être rendu réflecteur du côté de la matrice de bolomètres.

De plus, on peut associer aux bolomètres du dispositif de la figure 1 des filtres à grille (constituant "les négatifs" des bolomètres à grille).

Ces filtres à grille sont alors couplés c'est-à-dire disposés à une distance de l'ordre de la longueur d'onde moyenne à détecter de manière à rendre ces filtres et les bolomètres interdépendants en ce sens que la réponse spectrale obtenue n'est pas équivalente au produit de la transmission spectrale des filtres par l'absorption spectrale du dispositif.

On notera enfin la possibilité, par construction, de rendre les cavités anti-résonantes à une longueur d'onde λ1 et de rendre les grilles capacitives résonantes à une longueur d'onde λ2.

On choisit la hauteur de cavité égale à la moitié de la longueur d'onde moyenne des ondes à rejeter.

Dans ce cas les cavités n'absorbent pas ces ondes, d'où l'expression "cavités anti-résonantes".

La conjugaison de cet effet d'anti-résonance et de l'effet de résonance des grilles capacitives conduit à des absorptions spectrales modulables pour obtenir par exemple des filtres passe-bande en absorption ou même des doubles filtres passe-bande en absorption.

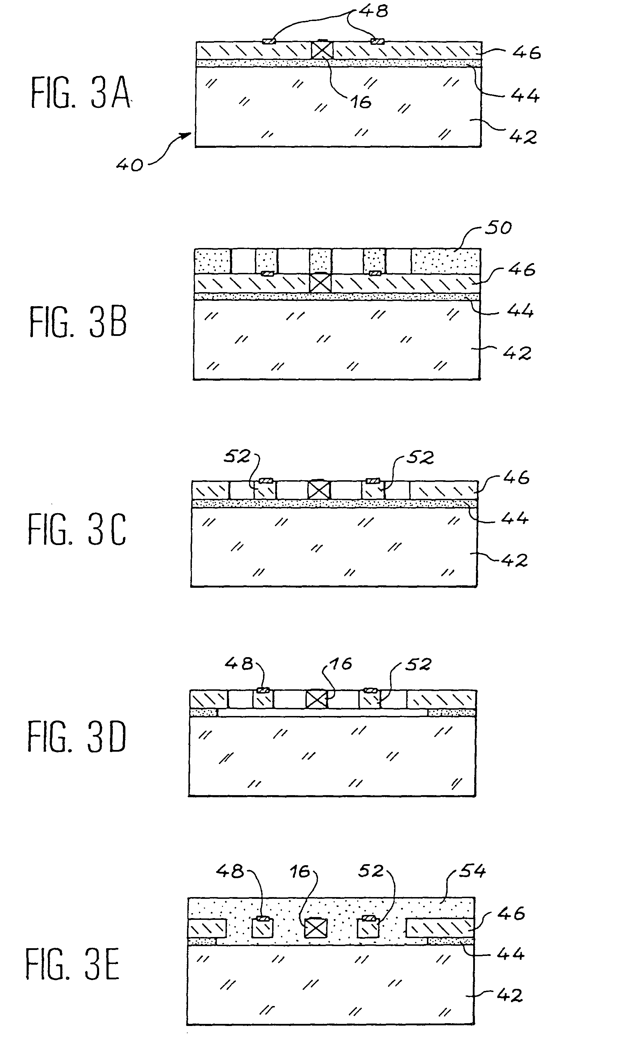

Les figures 3A à 3H illustrent schématiquement un procédé de fabrication permettant d'obtenir un dispositif du genre de celui des figures 1 et 2.

On utilise (figure 3A) un substrat 40 de type SIMOX comprenant un substrat primaire 42 en silicium surmonté par une couche 44 de silice elle-même surmontée par une couche 46 en silicium.

On réalise les thermomètres 16 par implantation locale dans la couche de silicium 46.

On réalise également les diverses métallisations de grille 48 (motifs conducteurs) par dépôt et gravure d'une couche métallique.

Ensuite (figure 3B) on masque les divers thermomètres et les diverses métallisations de grille au moyen d'une couche de résine photosensible 50.

Le masque de résine a une forme appropriée à la gravure permettant d'obtenir les grilles de silicium et les bras de liaison des grilles au substrat (non représentés mais dont il a été question dans la description de la figure 2).

Cette étape de gravure est illustrée par la figure 3C et conduit à la réalisation des grilles 52 et des bras de liaison et à l'individualisation des thermomètres.

On grave ensuite la couche 44 de silice pour réaliser l'isolation thermique des grilles 52 (figure 3D) tout en épargnant les points d'appui (bras) de celles-ci.

On dépose ensuite sur l'ensemble ainsi obtenu une couche de résine photosensible 54 dans laquelle se trouvent alors les grilles (figure 3E).

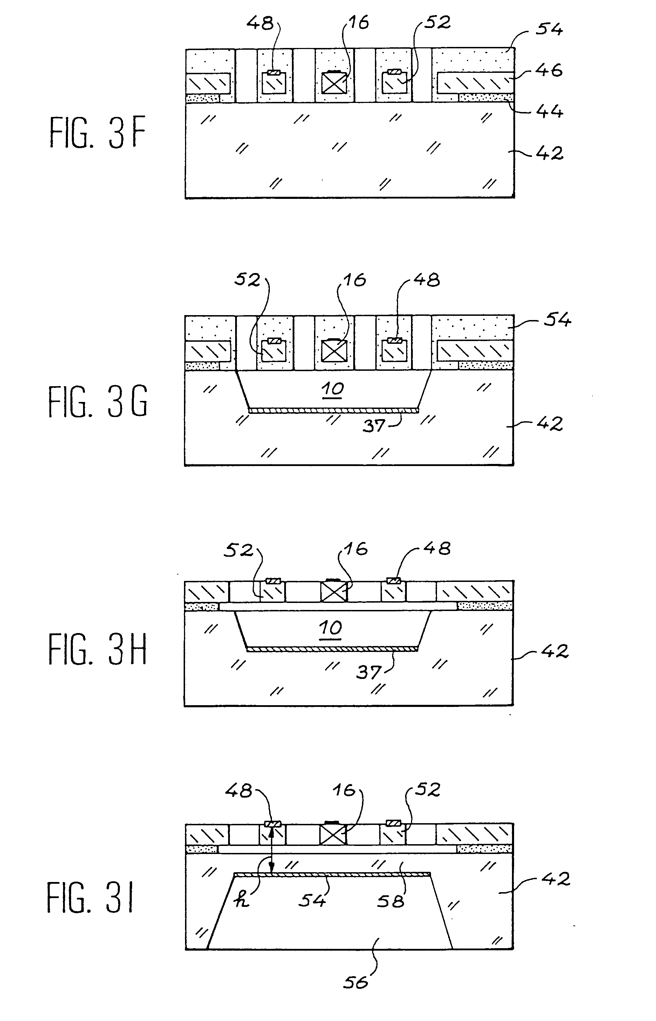

On grave cette couche de résine 54 de manière à former des trous d'accès à la surface supérieure du substrat primaire 42 (figure 3F).

On grave ensuite (figure 3G) le silicium de ce substrat 42 à travers ces trous de manière à obtenir chaque cavité 10 (déjà mentionnée dans la description de la figure 2) et l'on dépose une couche réflectrice métallique 37 au fond de chaque cavité 10.

On élimine ensuite la couche de résine 54 (figure 3H).

On décrit ci-après un autre procédé de fabrication d'un dispositif de détection bolométrique conforme à l'invention.

Cet autre procédé comprend également les étapes décrites en faisant référence aux figures 3A à 3D.

Cependant cet autre procédé est plus simple étant donné que, après l'étape correspondant à la figure 3D, on ajoute simplement une étape illustrée par la figure 31.

Au cours de cette étape, on grave le silicium du substrat primaire 42 à partir de la face inférieure de celui-ci et l'on dépose une couche métallique 54 au fond de chaque zone 56 ainsi gravée.

Cette couche métallique 54 constitue un réflecteur sur la face arrière de la cavité résonante 58 que l'on voit sur la figure 3I.

Dans ce cas, cette cavité résonante 58 est constituée par une épaisseur de silicium.

La distance h entre le réflecteur 54 et les motifs conducteurs 48 est proche de λ/(4n), où λ est la longueur d'onde moyenne des ondes à détecter et n l'indice optique du silicium.

On notera qu'avec cet autre procédé de fabrication on obtient une cavité résonante en silicium et non plus une cavité vide de matière.

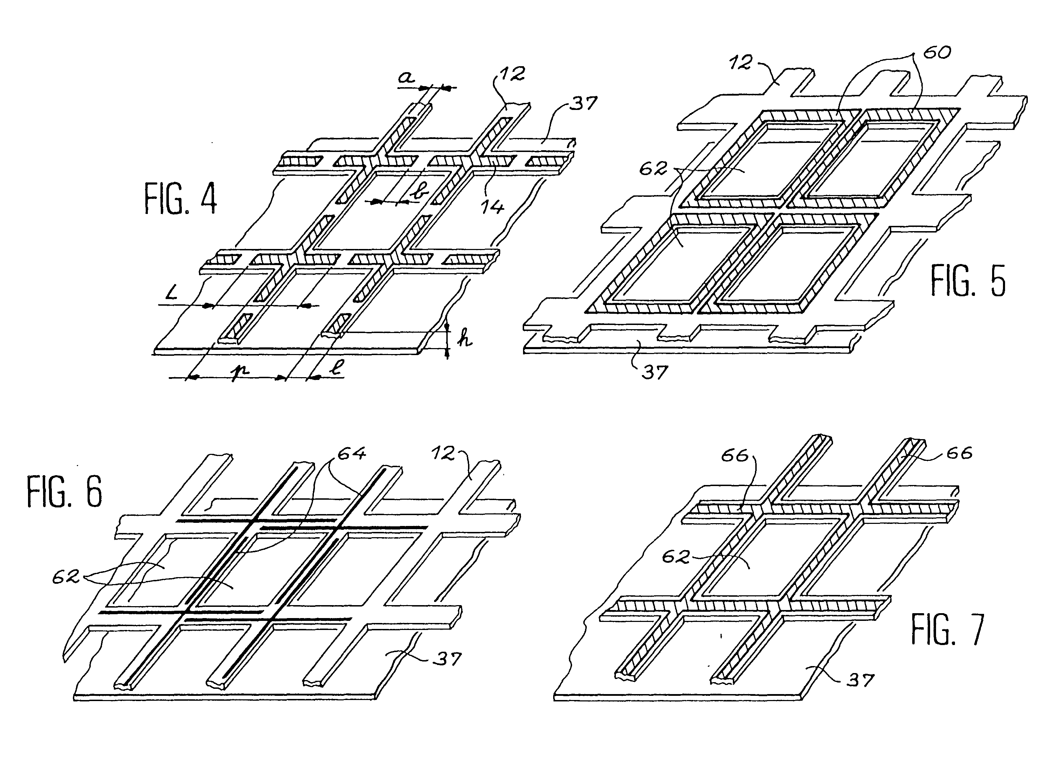

Les figures 4 à 7 illustrent schématiquement divers motifs conducteurs utilisables dans des dispositifs conformes à l'invention.

On voit sur la figure 4 des motifs 14 en forme de croix qui sont formés sur la grille en silicium 12.

On voit également sur la figure 4 la couche métallique 37 formant le réflecteur de la cavité du bolomètre comprenant les motifs 14.

Cette couche 37 est faite d'un métal de très faible résistivité, d'épaisseur de l'ordre de 1 µm et ayant une résistance par carré inférieure à Zo/N, Zo étant l'impédance du vide (377 Ω) et N étant supérieur à 100.

Il s'agit donc bien d'un réflecteur.

Comme on l'a vu plus haut, la distance h entre les motifs conducteurs 14 et cette couche métallique 37 est proche du quart de la longueur d'onde moyenne à detecter λ lorsque le milieu entre la grille et le réflecteur est le vide.

Cependant la distance h est proche de λ/(4n) où n est l'indice optique du milieu séparant la grille et le réflecteur, lorsque ce milieu n'est pas le vide (mais le silicium dans un exemple vu plus haut).

La grille 12 en matériau transparent aux ondes à détecter et d'épaisseur de l'ordre de 1 µm ou moins sert de support mécanique.

Les motifs conducteurs 14 ont une épaisseur inférieure à 1 µm et sont faits d'un métal de résistivité donnée avec une résistance par carré de l'ordre de A.Zo/n1.

Le paramètre n1 est un facteur dépendant des indices optiques des milieux situés entre les motifs métalliques et le réflecteur.

Le paramètre A compris entre 0 et 1 est un facteur dépendant de la géométrie des motifs métalliques.

Les expressions analytiques n'étant pas simples à obtenir, une simulation par résolution des équations de Maxwell est nécessaire.

On précise que le pas ou période p de la grille peut être identique ou différent suivant deux axes perpendiculaires dans le plan de la grille.

Ce pas p est de l'ordre de la longueur d'onde minimum à détecter afin d'éviter toute diffraction de Bragg.

La largeur l de la grille peut être choisie librement dans les limites de réalisation technologiques et à condition d'obtenir un paramètre A compris entre 0 et 1.

L'intérêt d'avoir un paramètre A faible est d'obtenir des bolomètres de très faible capacité calorifique et une immunité vis-à-vis des particules cosmiques en milieu spatial.

La longueur L des motifs (dans le cas capacitif illustré par la figure 4) est de l'ordre de la moitié de la longueur d'onde moyenne à détecter.

On notera qu'on peut imposer la longueur L des motifs indépendamment de la période p de la grille en tenant compte des contraintes topologiques.

Le paramètre a représente la largeur des motifs et il est inférieur à l.

Le paramètre b représente l'écart minimum entre les motifs qui est limité par la faisabilité de la grille du point de vue technologique.

On fait en sorte que le facteur de remplissage de la grille en métal soit voisin de celui du support.

La figure 5 illustre schématiquement d'autres motifs 60 de type capacitif.

Ces motifs 60 ont la forme de cadres entourant chacun une ouverture 62 de la grille en silicium 12.

La figure 6 illustre schématiquement d'autres motifs 64 de type capacitif encore en forme de croix.

Dans le cas de la figure 6, deux branches de ces motifs 64 en forme de croix se trouvent placées entre deux ouvertures voisines 62 de la grille 12.

La figure 7 illustre schématiquement un autre exemple de motifs conducteurs 66 utilisables dans l'invention, ces motifs 66 de la figure 7 étant en contact électrique les uns avec les autres et étant donc de type inductif.

Les exemples qui précèdent illustrent des grilles à périodicité "cartésienne" (suivant deux axes perpendiculaires dans le plan de la grille).

L'invention n'est pas limitée à de telles grilles.

On peut réaliser des dispositifs conformes à l'invention dans lesquels la périodicité de la grille et de ses motifs métalliques est radiale et circulaire dans le plan de la grille.

Les documents cités dans la présente description sont les suivants :
(1) "Bolometers for infrared and millimeter waves", P.L. Richards, J. Appl. Phys. 76(1), 1 juillet 1994, p.1 à 24
(2) "Monolithic silicon bolometers", P.M. Downey et al., Applied Optics, vol.23, n°6, 15 mars 1984, p.910 à 914
(3) "Issues in the readout of FIR and mm-wave bolometers for astrophysical applications", P.T. Timbie et al., SPIE vol. 2226 Infrared Readout Electronics II (1994), p.2 à 13
(4) "Développement et exploitation de bolomètres au sol", R. Neri et al., Note interne de l'Institut de Radio-Astronomie Millimétrique
(5) "FIRST Far-Infra-Red and Submillimetre Space Telescope", S. Beckwith et al., European Space Agency, SCI (93)6, Septembre 1993
(6) "Infrared and millimeter wave absorber structures for thermal detectors", A. Hadni et al., Infrared Phys., vol.30, n°6, 1990, p.465 à 478
(7) "Absorption of electromagnetic radiation in a layered metal and insulator structure", A. Ya. Blank et al., Journal of communications technology and electronics, 39(3), 1994, p.113 à 122
(8) "Millimeter-submillimeter wavelength filter system", L.A. Page et al., Applied Optics, vol.33, n°1, 1 janvier 1994, p.11 à 23.

## Revendications

1. Dispositif de détection bolométrique pour ondes millimétriques et submillimétriques, ce dispositif comprenant au moins un bolomètre (8) formé sur un support (6) transparent aux ondes à détecter, ce dispositif étant **caractérisé en ce que** chaque bolomètre comprend :
- une cavité résonante réflectrice (10),
- une grille (12) thermiquement isolée du support et placée au-dessus de la cavité,
- un ensemble de motifs périodiques (14, 60, 64, 66) électriquement conducteurs qui sont formés sur la grille et dont l'impédance électrique est adaptée à celle du vide, et
- un thermomètre principal (16) rendu solidaire de la grille.

2. Dispositif selon la revendication 1, **caractérisé en ce que** les motifs (14, 60, 64) sont électriquement reliés les uns aux autres.

3. Dispositif selon la revendication 1, **caractérisé en ce que** les motifs (66) sont électriquement isolés les uns des autres.

4. Dispositif selon la revendication 3, **caractérisé en ce que** la taille des motifs est de l'ordre de la moitié de la longueur d'onde moyenne des ondes à détecter.

5. Dispositif selon l'une quelconque des revendications 1 à 4, **caractérisé en ce que** le pas de la grille (12) est de l'ordre de la moitié de la longueur d'onde moyenne des ondes à détecter.

6. Dispositif selon l'une quelconque des revendications 1 à 5, **caractérisé en ce que** chaque bolomètre comprend en outre un thermomètre auxiliaire (26) associé au thermomètre principal (16) en vue de faire une mesure différentielle de température.

7. Dispositif selon l'une quelconque des revendications 1 à 6, **caractérisé en ce qu'**il comprend en outre un circuit électronique (34) de lecture des signaux fournis par chaque bolomètre.

8. Dispositif selon l'une quelconque des revendications 1 à 7, **caractérisé en ce que** chaque bolomètre est associé à un cône concentrateur (38).

9. Dispositif selon l'une quelconque des revendications 1 à 8, **caractérisé en ce qu'**il comprend une matrice (4) de MxN bolomètres, M et N étant des nombres entiers au moins égaux à 1.

10. Procédé de fabrication du dispositif de détection selon la revendication 1, **caractérisé en ce qu'**il comprend les étapes suivantes :
- on forme le thermomètre principal et les motifs conducteurs du bolomètre sur un substrat de silicium/silice/silicium (42, 44, 46),
- on forme la grille du bolomètre sur ce substrat,
- on élimine la silice (44) du substrat sous cette grille, et
- on forme la cavité résonante réflectrice (10, 58) sous la grille.

11. Procédé selon la revendication 10, **caractérisé en ce que**, pour former la cavité,
- on élimine, sous la grille, le silicium du substrat, à partir de la face-arrière de ce substrat, en laissant subsister une couche de silicium (58) dont l'épaisseur correspond à la résonance, et
- on forme une couche réflectrice (54) sur cette couche de silicium du côté de la face-arrière du substrat.

12. Procédé selon la revendication 10, **caractérisé en ce que**, pour former la cavité,
- on élimine, sous la grille, le silicium du substrat, à partir de la face-avant de ce substrat et sur une profondeur correspondant à la résonance, et
- on forme une couche réflectrice (37) en regard de la grille, au fond de la cavité (10) ainsi obtenue par l'élimination du silicium.

## Claims

1. Bolometric detection device for millimetre or sub-millimetre waves, the device including at least one bolometer (8) formed on a support (6) transparent to the waves to be detected, the device being **characterized in that** each bolometer includes:
- a reflecting resonant cavity (10),
- a grid (12) thermally insulated from the support and positioned above the cavity,
- an assembly of regular patterns (14, 60, 64, 66) of electrical conductors which are formed on the grid and whose electrical impedance is matched to that of the void, and
- a main thermometer (16) integral with the grid.

2. Device according to claim 1, **characterized in that** the patterns (14, 60, 64) are electrically connected to each other.

3. Device according to claim 1, **characterized in that** the patterns (66) are electrically insulated from each other.

4. Device according to claim 3, **characterized in that** the size of the patterns is of the order of half the mean wavelength of the waves to be detected.

5. Device according to any one of the claims 1 to 4, **characterized in that** the spacing of the grid (12) is of the order of half the mean wavelength of the waves to be detected.

6. Device according to any one of the claims 1 to 5, **characterized in that** each bolometer includes, in addition, an auxiliary thermometer (26) linked to the main thermometer (16) for the purpose of making differential temperature measurements.

7. Device according to any one of the claims 1 to 6, **characterized in that** it includes, in addition, an electronic circuit (34) to read the signals supplied by each bolometer.

8. Device according to any one of the claims 1 to 7, **characterized in that** each bolometer is linked to a concentrator cone (38).

9. Device according to any one of the claims 1 to 8, **characterized in that** it includes a matrix (4) of MxN bolometers, M and N being whole numbers at least equal to 1.

10. Method of manufacturing the detection device according to claim 1, **characterized in that** it includes the following steps:
- the main thermometer and the bolometer conductor patterns are formed on a silicon/silica/silicon substrate (42, 44, 46),
- the grid of the bolometer is formed on this substrate,
- the silica (4) is removed from the substrate under this grid, and
- the reflecting resonant cavity (10, 58) is formed under the grid.

11. Method according to claim 10, **characterized in that**, to form the cavity,
- the silicon is removed from the substrate, under the grid, from the back face of the substrate, allowing a layer of silicon (58) to remain, the thickness of which corresponds to the resonance, and
- a reflecting layer (54) is formed on this silicon layer on the back face of the substrate.

12. Method according to claim 10, **characterized in that**, to form the cavity,
- the silicon is removed from the substrate, under the grid, from the front face of this substrate, and to a depth corresponding to the resonance, and
- a reflecting layer (37) is formed facing the grid, in the bottom of the cavity (10) thus obtained by the removal of silicon,

## Patentansprüche

1. Bolometrische Detektorvorrichtung für Millimeter- und Submillimeterwellen, wenigstens ein Bolometer (8) enthaltend, gebildet durch einen für die zu detektierenden Wellen durchlässigen Träger (6), wobei diese Vorrichtung
**dadurch gekennzeichnet ist, dass** dieses Bolometer umfasst:
- einen reflektierenden Hohlraumresonator (10),
- ein Gitter (12), thermisch isoliert vom Träger und über dem Hohlraum angeordnet,
- ein System periodischer Muster (14, 60, 64, 66), elektrisch leitfähig, die auf dem Gitter ausgebildet sind und deren elektrische Impedanz an die des Vakuums angepasst ist, und
- ein Hauptthermometer (16), fest verbunden mit dem Gitter.

2. Vorrichtung nach Anspruch 1, **dadurch gekennzeichnet, dass** die Muster (14, 60, 64) elektrisch miteinander verbunden sind.

3. Vorrichtung nach Anspruch 1, **dadurch gekennzeichnet, dass** die Muster (66) elektrisch voneinander isoliert sind.

4. Vorrichtung nach Anspruch 3, **dadurch gekennzeichnet, dass** die Größe der Muster die gleiche Größenordnung aufweist wie die halbe mittlere Wellenlänge der zu detektierenden Wellen.

5. Vorrichtung nach einem der Ansprüche 1 bis 4, **dadurch gekennzeichnet, dass** die Teilung des Gitters (12) die gleiche Größenordnung aufweist wie die halbe Wellenlänge der zu detektierenden Wellen.

6. Vorrichtung nach einem der Ansprüche 1 bis 5, **dadurch gekennzeichnet, dass** jedes Bolometer außerdem ein Hilfsthermometer (26) umfasst, das mit dem Hauptthermometer (16) hinsichtlich einer Temperaturdifferentialmessung verbunden ist.

7. Vorrichtung nach einem der Ansprüche 1 bis 6, **dadurch gekennzeichnet, dass** es außerdem eine elektronische Schaltung (34) zum Lesen der durch jedes Bolometer gelieferten Signale umfasst.

8. Vorrichtung nach einem der Ansprüche 1 bis 7, **dadurch gekennzeichnet, dass** jedes Bolometer mit einem Konzentrationskonus (38) verbunden ist.

9. Vorrichtung nach einem der Ansprüche 1 bis 8, **dadurch gekennzeichnet, dass** sie eine Matrix (4) aus MxN Bolometern umfasst, wobei M und N ganze Zahlen, wenigstens gleich 1, sind.

10. Verfahren zur Herstellung der Detektionsvorrichtung nach Anspruch 1,
**dadurch gekennzeichnet, dass** es die folgenden Schritte umfasst:
- man bildet das Hauptthermometer und die leitfähigen Muster des Bolometers auf einem Silicium/Siliciumdioxid/Silicium-Substrat (42, 44, 46),
- man bildet das Gitter des Bolometer auf diesem Substrat,
- man eliminiert das Siliciumdioxid (44) des Substrats unter diesem Gitter, und
- man bildet den reflektierenden Hohlraumresonator (10, 58) unter dem Gitter.

11. Verfahren nach Anspruch 10, **dadurch gekennzeichnet, dass**, zur Bildung des Hohlraums:
- man das Silicium des Substrats unter dem Gitter von der Rückseite dieses Substrats aus eliminiert, wobei man eine Siliciumschicht (58) stehen lässt, deren Dicke der Resonanz entspricht, und
- man auf dieser Siliciumschicht auf der Rückseite des Substrats eine reflektierende Schicht (54) bildet.

12. Verfahren nach Anspruch 10, **dadurch gekennzeichnet, dass**, um den Hohlraum zu bilden:
- man das Silicium des Substrats unter dem Gitter von der Vorderseite dieses Substrats aus über eine Dicke eliminiert, die der Resonanz entspricht, und
- man auf dem Boden des derart durch Eliminierung des Siliciums hergestellten Hohlraums (10) eine dem Gitter gegenüberstehende reflektierende Schicht (37) bildet,
